# EUROPEAN PATENT APPLICATION

(11) **EP 4 707 329 A2**
(43) Date of publication of application: **11.03.2026**
(21) Application number: 25195548.0
(22) Date of filing: 12.08.2025
(51) Int. Cl.: C08J 11/08, C08J 11/28, D06P 5/13, B29B 17/02, C08J 11/06, D06P 3/56, D06P 3/60, D06P 3/66, B01D 11/02

(54) **PROCESS AND PLANT FOR REMOVING DYES FROM WASTE TEXTILES**

(30) Priority: 13.08.2024 EP 24194424
(71) Applicant: Sanko Tekstil Isletmeleri San. Ve Tic. A.S., 16400 Inegol - Bursa (TR)
(72) Inventor: KONUKO LU, Fatih, 16400 Inegol - Bursa (TR); ÖKTEM, Gözde, 16400 Inegol - Bursa (TR); KAPLAN, Gökhan, 16400 Inegol - Bursa (TR); LOYAN, Kenan, 16400 Inegol - Bursa (TR); HAMITBEYLI, Agamirze, 16400 Inegol - Bursa (TR); AKBULUT, Sabrettin, 16400 Inegol - Bursa (TR); ZENGIN, Nuriye, 16400 Inegol - Bursa (TR)
(74) Representative: Gislon, Gabriele

(57) **Abstract**

In a process for removing dyes from a textile material, comprising or consisting of polyester fibers, or comprising or consisting of cotton fibers, a batch of said textile material is reduced to clippings having small size, treated with a solvent under stirring in an extraction chamber and centrifugated to remove the solvent, the solution comprising solvent and extracted material is used as a solvent to extract dye from another batch of textile material.

## Description

### Field of the invention

The present invention relates to a process and a plant for removing dyes from waste textiles in order to recycle textile material, such as fabrics, yarns, filaments and garments. In greater detail, the present invention relates to a process for recovering polyester material, as well as cellulosic materials, from dyed waste fabrics and garments.

### State of the art

Recycling pre-consumer, post-industrial, post-consumer, used, fabrics and garments, also known as "waste textile" or "waste fabric", has become a primary target in the textile industry; new and efficient processes for recycling are being actively researched. One of the goals is to provide processes to recycle the materials that are present in widely used fabrics and textiles, such as polyester, and cotton.

Challenges for using post-consumer textiles in these processes include contaminants that may cause chemical reactions that lower the polyester molecular weight, and residues of other materials may weaken the fibres. A problem in recycling polyester or cotton containing fabrics lies in fact in the removal of contaminants such as dyes and polyurethanic materials (e.g. elastane filaments) from the polyester or cotton fibers and filaments of the fabric.

WO2022118244 discloses recycling waste polyester material, including waste textiles by dissolving the polyester in a solution comprising hexafluoroisopropyl alcohol and a chlorinated hydrocarbon and/or an aromatic hydrocarbon. Before dissolution, a pre-treatment with dichloromethane (DCM) is carried out to remove color and impurities from PET bottles and waste textile material. This method does not provide an effective and complete removal of the dyes.

US2022169786 describes a method for producing a decolorized polyester by removing a colorant from a polyester with a decolorizing agent containing a glycol ether-type compound having a boiling point at atmospheric pressure of 160 °C or higher while heating the decolorizing agent to a temperature equal to or lower than a melting point of the polyester.

EP3699355 discloses a method and system for decolorizing textile waste materials, dyed with disperse dyes, under hydrothermal environment using dye adsorbent materials that are magnetically charged. Textile materials are treated under stirring in a decolorization reactor containing water and magnetic activated carbon as dye absorbing material, under autogenic pressure as obtainable when heating to about 100°C to 170°C. An ultrasonic generator is started to accelerate release of the dye molecules from the textile materials into the water. The dyes released by the polyester fibers are adsorbed by the magnetic activated carbon that is collected by activating a magnetic field at the end of the process.

US4003881 relates to a process for recovering polyester polymer by means of stripping the dye from dyed polyester fibers, subsequently dissolving the polyester fibers, thereafter precipitating out the polyester polymer for reuse.

### Summary of the invention.

In general, the known methods result in a partial degradation of the polyester polymer material and/or the cotton fibers, and often in an only partial removal of the dyes; particularly, the applicant realized that operating under mild conditions is necessary to reduce polyester and/or cotton degradation. Degradation of the polyester may be detrimental to the possibility of re-using the recovered polyester material. Similarly, degradation of the cotton fibers would jeopardize the mechanical properties and possibly also the appearance, of yarns produced with the recycled cotton fibers.

In particular, it would be very useful to have a process that can remove in a short time all the dyes, such as disperse dyes and vat dyes, and decorations, from a dyed or printed/decorated textile material, without degrading or damaging the polyester and/or cellulosic fibers included in the textile.

A further problem is that polyester based fabrics and garments may often contain polyurethane material, either as elastane-type filaments in the fabric yarns or as a layer printed on the garment as a decoration, e.g. in sport garments. The presence of the elastomeric material may be a problem when the polyester fibers and/or cotton fibers are recycled.

An aim of the present invention is to solve the above problem and to provide a process for recycling waste fabric comprising polyester and/or cellulosic fibers, particularly a process for removing dyes from waste materials comprising polyester and/or cellulosic fibers, that provides a safe, easy and environmentally clean way of recovering the polyester and/or cellulosic material from waste textile. Another aim of the present invention is to provide a process that allows the removal of dyes from waste textiles including polyester and/or cellulosic fibers, with reduced, or no, degradation of the polyester or cellulosic material. Particular aim of the present invention is to provide a process for removing dyes from waste textile in an environmentally friendly (i.e., "green") way, that is, a closed-loop process that can be carried out in a fully closed-loop plant (apparatus), whereby the solvent used (including water) is totally recovered and reused in the process.

The decolorized materials may then be further recycled in ways known, per se, in the art. For example, decolorized polyester material may be further recycled by depolymerizing the polyester, or by recovering polyester as staple fibers. Another preferred recycling process is converting decolorized PET and polyester materials into PET chips or beads which can be used in fiber spinning and/or moulding processes depending on the target field to be employed in. The cellulosic fibers possibly present in the waste textile can be removed from the polyester filaments or fibers, for example, by chemical or enzymatic digestion of the cellulosic fibers.

Similarly, the decolorized cotton or cellulosic material may be recycled in a way known per se, e.g. by mechanically providing cellulosic staple fibers, including regenerated cellulosic fibers, such as cotton fibers or regenerated cotton fibers, that can be worked into a yarn.

In particular with a pre-consumer material consisting in garments or fabrics, the said garments or fabrics may be de-colorized to a greige status (undyed) and recycled by subsequent dyeing or printing, or both, of the treated garment.

The problem is solved by means of the process according to claim 1 and claim 2 and by an apparatus, i.e. a plant, according to claim 18.

### Detailed description

One object of the invention is, thus, a process for removing dyes from a textile material, particularly a waste textile material, said textile material including a dye and at least 70% by weight, of polyester fibers, or comprising a dye and at least 90% by weight of cellulosic fibers, said process comprising the following steps:
a) providing said textile material and a solvent suitable to remove said dye from said textile in an extraction chamber to provide a mixture of textile and solvent;
b) extracting said textile with said solvent to provide a solution comprising solvent and extracted material, said extracted material including at least said dye, wherein said textile material and said solvent are stirred within said extraction chamber, during at least part of said extraction step, preferably during the entire extraction step;
c) removing said solution of solvent and extracted material from said textile;
characterized in comprising the steps of
a1) reducing said textile material into pieces preferably having maximum dimension of 5 cm prior to feeding said textile pieces to said extraction chamber;
b1) after step b), feeding said mixture of solvent and pieces of textile to a centrifuge to perform said step c);
c1) feeding solvent heated to a temperature suitable to remove dyes, preferably a temperature in the range of 80°C to 140°C, to said centrifuge after step c) to wash said textile and remove any residual dye from said textile;
wherein the bath ratio of textile (kg) to solvent (liters) is within the range of 1:3 (kg/l) to 1:20 (kg/l).

Another object of the invention is a process for removing dyes from a textile material, particularly a waste textile material, said textile material including at least 50% by weight, preferably at least 60% by weight, more preferably at least 70% by weight, of polyester fibers, said process comprising the following steps:
a) providing a batch of said textile material in an extraction chamber;
b) extracting said batch of said textile with a solvent to provide a solution comprising solvent and extracted material, said extracted material including at least a dye, wherein said textile material and said solvent are stirred within said extraction chamber, during at least part of said extracting step, preferably during the entire extracting step;
c) removing said solution of solvent and extracted material from said textile;
characterized in that said solution comprising solvent and extracted material obtained in step b) and/or c) is used as a solvent to extract dye from another batch of textile material, and in that said steps b) and c) are repeated, preferably until the amount of extracted material in said solution comprising solvent and extracted material reach a concentration whereby further dye extraction is impaired.

Also object of the invention is a process for removing dyes from a textile material, particularly a waste textile material, wherein said textile material includes at least 80% by weight, preferably at least 90% by weight of cellulosic fibers, preferably cotton fibers, wherein at least part of said cellulosic fibers are preferably indigo dyed, said process comprising the following steps:
a) providing a batch of said textile material in an extraction chamber;
b) extracting said batch of said textile with a solvent to provide a solution comprising solvent and extracted material, said extracted material including at least a dye, wherein said textile material and said solvent are stirred within said extraction chamber, during at least part of said extraction step, preferably during the entire extraction step;
c) removing said solution of solvent and extracted material from said textile;
characterized in that said solution comprising solvent and extracted material obtained in step b) and/or c) is used as a solvent to extract dye from another batch of textile material, and in that said steps b) and c) are repeated, preferably until the amount of extracted material in said solution comprising solvent and extracted material reach a concentration whereby further dye extraction is impaired.

Advantageously, it has been observed that, by means of the process of the invention, recycling of waste textiles comprising polyester and/or cellulosic fibers, particularly removing dyes from waste textile materials comprising polyester and/or cellulosic fibers, can be performed in a safe, quick, easy and environmentally friendly way. Also, the process of the invention allows the removal of dyes from waste textiles including polyester and/or cellulosic fibers, with reduced, or no, degradation of the polyester or cellulosic material in the waste textile. The process of the invention also allows an effective removal of dyes from textiles including both polyester and cotton. Advantageously, when the waste textiles material includes, also, polyurethane materials, e.g., elastane, or polyurethane prints or coatings, such polyurethane materials are effectively removed. The process of the invention allows to easily and effectively isolate and recover polyester materials (particularly polyester fibers and filaments), as well as cellulosic materials, from waste textiles, e.g., from waste textiles including a plurality of different dyes. Furthermore, allows the recovering of substantially all the solvent used. Particularly, the process of the invention allows to obtain a solvent recovery ratio of at least 99%, and up to 99.9%.

As used herein, the term "extracted material" refers to a material including the dyes and, possibly, other components and contaminants, removed from the waste textile material by treating the waste textile material, i.e., by extracting the waste textile material, with a solvent, according to the present description.

According to embodiments, the extraction chamber (or extractor) is a device known, per se, in the art. For example, the extraction chamber (extractor) may be selected from single/double shaft mixer, wash screw, washing machine like reactors, solvent cleaning machines. In embodiments, the extraction chamber is a cylindrical container, e.g. a drum, that has a rotation axis arranged substantially horizontally. In another embodiment the extraction chamber is a static container that houses an impeller that is rotated around a rotation axis in the extraction chamber The extraction chamber may have vertical or horizontal rotation axis. Preferably the extraction chamber is provided with an insulation to help maintain the solvent at the temperature required for best removal of dyes.

Preferred solvents are DMF (Dimethylformamide) or DMAC (Dimethylacetamide) or a mixture of DMF or DMAC with alkali water, or mixtures thereof. Preferably, the solvent is DMF. In embodiments used to decolorize textiles including or consisting of dyed cotton fibers, the solvent comprises DMF and alkali water, preferably a reducing agent for the dye. As used herein, the term "alkali water" refers to water having a pH of at least 10, for example, in the range of from 10 to 13.5. pH can be adjusted by adding a base, such as NaOH and KOH to water.

The solvent is heated at a temperature suitable to remove dyes from the textile.

According to embodiments, the extraction chamber containing solvent is rotated around its horizontal axis, whereby said textile material is stirred within said extraction chamber, during at least part of said extracting step (i.e., step b), preferably during the entire extracting step. In embodiments, textile material is stirred within said extraction chamber by means of a least one impeller, said impeller being arranged along the horizontal or vertical axis of said extraction chamber, said extraction chamber being preferably not moved. Preferably, the extraction chamber is thermally insulated.

The wording "stir", "stirred" and "stirring" is intended to define the movements of the textile pieces, together with the solvent, as obtained by: i) a rotation of an extraction chamber, or extraction container, that is rotated around its rotation axis or ii) the rotation of an impeller or similar device apt to impart a movement to the mixture of solvent and textile pieces in a static container. A combination of the two movement may be carried out. As above mentioned, in an embodiment the extraction chamber is a cylindrical container that has a rotation axis arranged substantially horizontally; preferably the the extraction chamber is housed in a tank. In another embodiment the extraction chamber is a static container that houses an impeller that is rotated around the vertical or along the horizontal axis of the extraction chamber.

According to embodiments, step c) includes a step of separating the solution comprising solvent and extracted material from the textile material by centrifuging. Advantageously, the use of centrifugation, particularly applied to the textile material impregnated with the solution comprising solvent and extracted material, after end of the extraction step, allows to effectively separate the textile material from the solution comprising solvent and extracted material that has been picked-up by the textile material, thus resulting in a particularly effective removal of the dye and residual solvent from the textile material. This further results in less energy consumption for drying the recovered textile materials at the end of the process, because the vast majority of solvent and/or solution comprising solvent and extracted material has already been removed. Additionally, the use of centrifugal force allows, also, to reduce the number of extractions (step b)) required for removing the dye (and optionally other materials) from the textile material. Centrifugation is, also, a particularly safe technique for removing residual solvent from the textiles. According to embodiments, the centrifuge is a centrifuge which rotates around its horizontal axis; in other embodiments the centrifuge rotates around its vertical axis.

According to embodiments, extraction step b) has a duration of from 2 minutes to 20 minutes, preferably from 5 minutes to 15 minutes, more preferably from 7.5 minutes to 12.5 minutes, most preferably 10 minutes. As below discussed, the centrifugation step of the process is preferably carried out for 1 to 5 minutes; this results in a total process time of about 25-30 minutes to complete the dye removal from the pieces of textiles. The short time required by the present invention process is a surprising result when compared with the time requested by prior art processes that can last up to 270 minutes or that require several extraction steps, as e.g. in US4003881.

According to embodiments, the temperature of the solvent (or the solution comprising solvent and extracted material) in the extraction chamber is in the range of from 80°C to 140°C, preferably from 82°C to 135°C. the temperature may be selected according to the solvent used and the dye to be removed. For example, with DMF used as the solvent, the temperature of the solvent (or the solution comprising solvent and extracted material) in the extraction chamber may be about 90°C.

Advantageously, the solvent in contact with the textile material, namely the mixture of solvent and textile pieces, is maintained at a temperature according to what above disclosed. To this purpose, the parts of the apparatus that are intended to contain textile and solvent are preferably thermally insulated: in particular, preferably at least the extraction chamber and the duct for feeding the solvent/textile mixture to the centrifuge, are thermally insulated. In preferred embodiments of the plant, all the ducts, pipes and tanks and reservoirs that are intended to contain solvent are thermally insulated by means known per se in the art. Additionally, the apparatus provides a closed system having zero emission. In fact, the solvent used for the process may be recovered at 99.9% after distillation, so that the process is a completely closed-loop process in the claimed apparatus.

According to embodiments, step b) is repeated at least two times and, preferably, between each repetition, removal of the solution of solvent and extracted material from textiles, according to step c), is carried out, preferably centrifugating. In embodiments, centrifuging can be carried out in the extraction chamber. For example, when the extraction chamber is a washing machine or a solvent cleaning machine, the extraction chamber may perform centrifugation and drying. Preferably the extraction chamber is different from the centrifugation device (namely a centrifuge). According to embodiments, centrifugation is carried out at g-force in the range of from 250 to 5000, preferably from 800 and 2000, more preferably from 900 to 1200, for a time in the range of from 0.5 to 10 minutes, preferably from 1 to 5 minutes. For example, centrifugation is carried out at a g-force from 250 to 5000 preferably from 800 to 2000, more preferably from 900 to 1300. In embodiments, after each centrifugation, the solution of solvent and extracted material is re-used to treat another batch of textile material.

According to embodiments, part of the solution comprising solvent and extracted material obtained during step b) is removed from said extraction chamber before step c). In other words, in embodiments, before step c) the solution comprising solvent and extracted material obtained during step b) is removed from said extraction chamber.

According to embodiments, step c) is carried out in a centrifuge. For example, the centrifuge can be selected from vertical peeler type bottom discharge centrifuge, horizontal peeler type centrifuge, horizontal pusher type centrifuge, decanter type centrifuge. Preferably, the centrifuge comprises filtering means to filter fiber particles from the solvent exiting the centrifuge, In embodiments, the centrifuge rotates around its horizontal axis. In embodiments, both the extraction chamber and the centrifuge rotate around their horizontal axis. In embodiments, the extraction chamber comprises a paddle-type impeller that rotates around the horizontal axis of the extraction chamber and includes paddles located along the shaft of the impeller in such a way that the mixture of solvent and textile material is moved during the extraction step along said horizontal axis from an inlet point of the extraction chamber to an outlet point on the opposite side of the extraction chamber.

In embodiments, after centrifugation, a washing step is carried out on the textile pieces after solvent removal in the centrifuge. Preferably, the washing is carried out in the centrifuge. In that case, the centrifuged textile material can be washed using fresh solvent that is fed to the inner part of the centrifuge by means of a solvent feeding line; during washing the centrifuge is rotated at a reduced speed with respect to the centrifugation speed, i.e. a speed that is effective to wash the textile pieces, preferably in the range of 300 to 700 rpm, preferably 400 to 600 rpm. According to embodiments hot washing is carried out, i.e. the temperature of the solvent fed to the centrifuge for the washing step is high enough to quickly bring the temperature of the mixture of pieces of textile and solvent to a temperature equal to or higher than the temperature of the solvent used for extraction of the textile material. The washing is preferably carried out for a time in the range of 3 to 10 minutes, more preferably about 5-6 minutes are enough to remove the remaining dye. After washing, the textiles are centrifuged again to recover the residual solvent on textiles used in washing step. The final content of solvent in the textile pieces after centrifugation is generally about 4-7% by weight: this provides the advantage of having an "annular cake" i.e. a layer of small pieces of fabric that are adhering to the lateral wall of the centrifuge at the end of a centrifugation step. Such a cake can be easily removed from said wall by known means such as, e.g., a scraper mounted on the door of the centrifuge and a screw feeding the scraped textile particles outside the centrifuge.

After centrifugation and, optionally, washing, the textiles are dried. For example, the centrifuged textiles may be moved from the centrifuge to a drying device to be dried. Advantageously, the solvent can be also recovered, regained and recollected during the drying step. According to embodiments, after centrifugation and, optionally, washing, before drying, the textiles, generally samples of the treated textile pieces, are checked in a quality control unit, wherein the amount of dye in the textiles is determined according to techniques that are, per se, known in the art, for example color measurements with spectrophotometry, i.e. Datacolor. If dye is still present in the textiles in an unacceptable amount, the textile material is moved back to the extraction chamber to be extracted again, according to step b) of the process of the invention. If the dye has been sufficiently removed from the textiles, the textiles are dried. In embodiments, the textiles undergo washing with water to remove the organic solvent, namely DMF or DMAC, before being forwarded to the drying step.

According to embodiments, the textile material obtained in step b) is moved from the extraction chamber to a storage tank, preferably before being moved to the centrifuge, for example, when the centrifuge is not able to hold the entire amount of textile material treated in the extraction chamber so that a further batch of textile material can be extracted in the extraction chamber, while the centrifugation of the textile material obtained in step b) is being completed.

According to embodiments, when the amount of the extracted material in said solution comprising solvent and extracted material is in a concentration whereby further dye extraction is impaired, the solution comprising solvent and extracted material is fed to a distillation device, whereby said solvent is separated from said extracted material. In this case, advantageously, the solvent is recovered and reused. Also, extracted materials, such as dyes, elastane and/or other polyurethane materials, can be recovered to be further processed. For example, when all textiles to be processed are dyed with the same dyestuff (like disperse or vat), dyestuff can also be regained and re-used without further treatments or processes.

According to embodiments, distillation, particularly distillation of DMF, is carried out at a temperature in a range from 70°C to 100°C, preferably from 75°C to 95°C, more preferably from 80°C to 90°C, and at a pressure in the range of from 15 to 90 mbar, preferably from 20 to 85 mbar, more preferably from 40 to 80 mbar.

According to embodiments, the textile material is provided to the extraction chamber in a form selected from powder, fibers, filaments, yarns, fabrics, clippings (i.e., pieces) of fabrics, garments, clippings (i.e., pieces) of garments and mixtures thereof. The textile material in the form of powder may be obtained by grinding other forms of waste textiles, such as, for example, fabrics or garments. According to embodiments, the process of the invention further comprises a step of grinding the waste textile material to obtain a powder, preferably a polyester powder.

According to embodiments, the process of the invention comprises a step of mechanically treating the textiles, preferably fabric and garments, to reduce their size, to obtain pieces of textiles, preferably pieces of fabric and garments (i.e., clippings of fabrics and garments). In preferred embodiments, the material is provided to the extraction chamber after the step of mechanical treatment in the form of pieces of fabric or garments (i.e., clippings) wherein at least 90% of said pieces have size from 1 mm to 50 mm.

According to embodiments, the material is polyester based fabric, optionally with elastane filaments, and is provided to the extraction chamber in the form of small pieces of fabric or garments (i.e., clippings), wherein 90% of said pieces of fabric or garments has a size in the range from 2 mm to 2.5 mm. Pieces of fabric and/or garments having the mentioned size can be obtained according to techniques and machines that are known, per se, in the art, for example grinding or shredding machines. According to other embodiments, if the waste textile contains cotton fibers to be recycled mechanically, preferably at least 50% cotton fibers, the fabric is provided to the extraction chamber in the form of pieces of fabric (i.e., clippings), wherein 90% of said pieces of fabric has a size of at least 20 mm, preferably in the range from 20 mm to 50 mm.

An advantage of having the textile waste material, namely a fabric, woven or knitted, that is in the form of reduced size pieces as above discussed, is that the extraction time is dramatically reduced; e.g. the extraction step of 400 kg of textile polyester pieces in hot (90°-95°C) DMF under stirring according to the invention in an extraction chamber typically can require only 10 minutes. Also, the washing step with hot DMF solvent in centrifuge at reduced rpm, followed by centrifugation may be completed in 5-10 minutes. Another advantage is that the mixture of small fabric pieces and hot solvent may be transferred along pipes from one part to another part of the apparatus, i.e. of the plant.

According to embodiments, the textile material, optionally after the step of mechanical treatment for size reduction, is mixed with the solvent in a bath ratio of textile pieces (in kg) to solvent (in liters) that is in the range of 1:8 to 1:20, preferably 1:10 to 1:20. The mixture (that preferably has a slurry-like consistency) is thus suitable to be moved, e.g. by pumping or archimede screws, along the apparatus, e.g. it is fed from extraction chamber to a centrifuge.

According to embodiments, the textile material includes a plurality of dyes. According to embodiments, the polyester fibers in the textile material may include at least a dye selected from disperse dyes and/or polyester fibers can be dope-dyed. According to embodiments, cellulosic fibers, preferably cotton fibers, in the textile material, can include at least one dye selected from vat dyes, reactive dyes, direct dyes, sulfur dyes, and mixtures thereof. In embodiments, cellulosic fibers, preferably cotton fibers, in the textile material, can include at least one vat dye, preferably indigo.

For example, fabrics that may be recycled by means of the claimed process may be those of polyester sport apparel, e.g. T-shirts and garments printed with decorations on a thin layer or membrane of polyurethane material applied to the garment. The polyurethane layer is dissolved by the solvent together with the inks that form the decorative element (e.g. a logo or a number etc.).

In the present description reference is made to "polyurethane materials" or to PU material; this term is encompassing elastomeric materials (such as elastane and spandex) used in the yarns (usually in the yarn's core) and any other polyurethane material possibly present on or in the fabric, e.g. as part of a decoration (e.g. a printed decoration) or a coating.

According to embodiments, at least part of the polyester fibers is dyed, preferably dyed with at least one disperse dye or dope-dyed. According to embodiments, all the polyester fibers in the textile material are dyed, preferably dyed with at least one disperse dye, optionally with a plurality of disperse dyes, or dope-dyed.

According to embodiments, step b) is carried out more than once, preferably in a different extraction chamber each time, and/or step c) is carried out more than once, optionally in a different centrifuge each time. The extraction chambers are arranged in series. In an embodiment each extraction chamber is provided with a centrifuge.

According to embodiments, the extraction chamber is a first extraction chamber, and the textile material, after a first extraction step b), is fed from the first extraction chamber to a first centrifuge for a first removal step c). Subsequently, the textile material is fed from the first centrifuge to a second extraction chamber for a second extraction step b) and, then, from the second extraction chamber to a second centrifuge for a second extraction step c). In embodiments, the first and second extraction steps b) and the first and second removal steps c) are carried out in two different extraction chambers and two different centrifuges, respectively.

According to embodiments, several batches of waste textiles are extracted with the same batch of solvent. For example, after the dye is completely removed after extraction in a second extraction chamber, the solvent used in the second extraction chamber and/or said second centrifuge, preferably from said extraction chamber, is fed to the first extraction chamber to extract a subsequent batch of textile material. In this case, advantageously, the solvent (i.e., the solution comprising solvent and extracted material) removed from the second extraction chamber and/or said second centrifuge is used to extract a subsequent batch of textile material, to further increase the concentration of the extracted material in the solution, thus reducing the overall amount of solvent required for the process. For example, the waste textile material may be extracted with solvent in a first extraction chamber, centrifuged and then extracted again in a second extraction chamber and subsequently centrifuged again, preferably in a second centrifuge. Fresh solvent may be used for the second extraction step.

A solution comprising solvent and extracted material is obtained after the second extraction step; said solution (including the residual solution recovered from the second centrifuge, after centrifugation of the textile material after second extraction, and fed back to the second extraction chamber) can be reused for multiple extractions in the second extraction chamber, e.g., up to 20, preferably up to 30, more preferably up to 40 extractions. At this point, the solution comprising solvent and extracted material may be fed to the first extraction chamber and reused for extraction waste textiles until the extracted material in the solution reach a concentration whereby further extraction of dye is impaired. When the extracted material in the solution reached a concentration whereby further extraction of dye is impaired, the solution comprising solvent and extracted material is fed to a distillation device, whereby the solvent is distilled and recovered. In other words, when further dye extraction in the first extraction chamber is impaired, the solution comprising solvent and extracted material is fed to a distillation device and the solution comprising solvent and extracted material obtained in the second extraction chamber is fed to the first extraction chamber. In this case, advantageously, the concentration of extracted material in the solution comprising solvent and extracted material obtained in the second extraction chamber is not limiting, unless said the solution comprising solvent and extracted material obtained in the second extraction chamber is suitable to perform extraction step b) on a further batch of textiles in the first extraction chamber.

According to embodiments, steps b) and c) are repeated more than twice in more than two extraction chambers and centrifuges, and the solvent removed from any extraction chamber different from the first chamber is fed to the previous extraction chamber. In this case, advantageously, the solvent (i.e., the solution comprising solvent and extracted material) removed from any second or further extraction chamber is used to extract a subsequent batch of textile material, in the previous extraction chamber, so that the concentration of the extracted material in the solution increases any time the solution is moved to an extraction chamber to a previous one, whereby a new batch of textile material is extracted, for the first time, in the first extraction chamber, with a solution comprising solvent and extracted material, and subsequently treated in the following extraction chambers using solutions having a progressively lower concentration of extracted material.

According to embodiments, the solvent (i.e., the solution comprising solvent and extracted material) exiting the extraction chamber is filtered. The filtering maximises the quantity of the waste textile that remains in the extraction chamber while maintaining the solution comprising solvent and extracted material free from solid bodies.

According to embodiments, the solvent used in step b) already contains extracted material, said extracted material including at least a dye, before starting step b). In other words, according to embodiments, the solvent used in step b) is in the form of a solution comprising solvent and an extracted material, said extracted material including at least a dye. In embodiments, the solvent already containing extracted material, can be fed to the extraction chamber from a solvent storage tank. In embodiments, such solvent storage tank is configured to receive the solutions comprising solvent and an extracted material exiting from the extraction chamber and/or the centrifuge. In embodiments, the extracted material in the solution may derive from other processes and/or or plants. In embodiments, the extracted material in the solution may derive from a batch of textile material, previously treated according to the process of the invention.

According to embodiments, the solvent comprises DMF (Dimethylformamide) or DMAC (Dimethylacetamide) or a mixture of DMF or DMAC with alkali water, or mixtures thereof. Preferably, the solvent is DMF. In embodiments where the textile includes cotton fibers and the relevant dyes, the solvent comprises DMF and alkali water. As used herein, the term "alkali water" refers to water having a pH of at least 10, for example, in the range of from 10to 13.5. pH can be adjusted by adding a base, such as NaOH and KOH to water.

According to embodiments, the bath ratio textile/solvent (kg/liters) is in the range from 1/3 to 1/20 preferably from 1/3.5 to 1/10, more preferably from 1/4 to 1/6. In embodiments, the bath ratio textile/solvent (kg/liters) is in the range from 1/3 to 1/20 preferably from 1/10 to 1/20. The advantage of a bath ratio of 1/10 to 1/20 is that the mixture of textile fabric pieces and solvent is suitable to be pumped along duct means, e.g. from the mixing tank to the extraction chamber and from the extraction chamber to the centrifuge. In embodiments, additional solvent and/or additional solution comprising solvent and extracted material is added to maintain the bath ratio in the above-mentioned range.

According to embodiments, the step c) is carried out in a centrifuge at a g-force in the range of from a g-force from 250 to 5000, preferably from 800 and 2000, more preferably from 900 to 1300, for a time in the range of from 0.5 to 10 minutes, preferably from 1 to 5 minutes. The force exerted on a sample in a centrifuge is a function of the rotation speed of the centrifuge (RPM) and the radius of the rotor. Knowing the radius of the rotor in centimeters, the equation to calculate G-Force (gravitational force equivalent) is: *G-Force = 0.00001118 x Rotor Radius x (RPM)².*

In embodiments, the waste textile material may be pre-treated before being extracted according to step b). In embodiments, for example, the size of the waste textile material can be reduced, e.g., by cutting fabrics or garments (e.g., 100% PET fabrics or garments) into clippings, of by cutting clippings (e.g., 100% PET clippings) to further reduce their size, or by grinding fabrics or garments or clippings to obtain a powder, particularly a 100% PET powder.

According to embodiments, the waste material is initially treated to obtain pieces of fabric (e.g. clippings) having size from 1 mm to 50 mm, preferably from 2 mm to 10 mm, more preferably from 2 mm to 2.5 mm especially for polyester fabrics. According to embodiments, when the textile material contains cotton (at least 50% cotton) the size of the pieces is in the range of 20 to 50 mm.

. In embodiments, when the textile material includes less than 50% by weight, preferably less than 30% by weight of cotton, the textile material can be pretreated to reduce the amount of cotton in the textile material to be extracted. For example, the amount of cotton in the textile may be reduced by pre-treating the waste textile with cellulase enzymes or with chemical reagents suitable for depolymerizing cotton (or other cellulosic materials), such as treatment with inorganic or organic acids, according to techniques that are known, per se, in the art. In embodiments, when the textile material includes elastane fibers, the textile material can be pretreated to reduce the amount of elastane in the textile material to be extracted. For example, the amount of elastane in the textile may be reduced by pre-treating the waste textile with DMF according to techniques that are known, per se, in the art. Advantageously, when the process of the invention comprises a step of pre-treating the waste textile material, the process of the invention results to be particularly efficient.

According to embodiments, the textile material consists of polyester fibers. In other words, according to embodiments, the textile material can be selected from polyester fibers, polyester filaments, polyester yarns, polyester fabrics, clippings of polyester fabrics (i.e., 100% polyester fabrics), polyester garments, clippings of polyester garments and mixtures thereof. For example, the textile material can be selected from fabric consisting of polyester fibers (i.e., 100% polyester fabrics), clippings consisting of polyester fibers (i.e., clippings from 100% polyester fabrics or garments), polyester fibers, or mixtures thereof. According to embodiments, at least part of the polyester fibers in the textile material consisting of polyester fibers is dyed. According to embodiments, all the polyester fibers in the textile material consisting of polyester fibers are dyed. According to embodiments, the textile material consisting of polyester fibers includes a plurality of dyes, for example a plurality of disperse dyes.

According to embodiments, the textile material is selected from fabrics consisting of polyester fibers, clippings (i.e., pieces of fabrics and/or garments, preferably having the above discussed size) consisting of polyester fibers and mixtures thereof, wherein at least part of said polyester fibers is dyed with at least one disperse dye. In this case, solvent is preferably DMF, and the temperature of said solvent (or the solution comprising solvent and extracted material) used in said step b) in said extraction chamber is in the range of from 85°C to 105°C, preferably about 95°-100°C.

According to embodiments, the textile material is polyester fibers (i.e., separated fibers), and said polyester fibers are dyed with at least one disperse dye. In this case, the solvent is preferably DMF, and the temperature of said solvent (or said solution comprising solvent and extracted material) used in said step b) in said extraction chamber is in the range of from 80°C to 110°C, preferably from 85°C to 105°C.

According to embodiments, the textile material is in the form of clippings (i.e., pieces of fabrics and/or garments, preferably having the above discussed size) consisting of polyester fibers, and at least part of said polyester fibers is dope-dyed. In this case, the solvent is preferably DMF, and the temperature of said solvent (or said solution comprising solvent and extracted material) used in said step b) in said extraction chamber is in the range of from 80°C to 140°C, preferably from 85°C to 130°C.

According to embodiments, the waste textile also comprises at least a polyurethane material, preferably elastane. According to embodiments, the textile material comprises polyester fibers and further comprises at least a polyurethane material, preferably elastane. In this case, advantageously, the polyurethane materials, such as elastane, included in the textile material is extracted together with dyes. For example, the textile material may comprise at least 90% by weight of polyester fibers and further comprise one or more polyurethane materials, preferably elastane, more preferably at most 10% by weight of elastane. In a particular embodiment, the textile material includes 90% by weight of polyester fibers and 10% by weight of elastane.

According to embodiments, the textile material comprises at least 90% by weight of polyester fibers and at most 10% by weight of elastane fibers, and at least part of said polyester fibers is dyed with at least one disperse dye. In this case, the solvent is preferably DMF, and the temperature of said solvent (or said solution comprising solvent and extracted material) used in said step b), in said extraction chamber, is in the range of from 85°C to 105°C, and preferably is about 95°C.

According to embodiments, the textile material comprises polyester fibers and further comprise at least a cellulosic material, preferably cotton fibers. For example, the textile material may comprise at least 50%, preferably 60%, more preferably 70%, by weight of polyester fibers and further comprise cellulosic fibers, for example at most 50%, preferably 40%, more preferably 30%, by weight cotton fibers.

According to embodiments, at least part of the cellulosic fibers in the textile material is dyed. According to embodiments, all the cellulosic fibers in the textile material are dyed. According to embodiments, the textile material comprises cellulosic fibers including a plurality of dyes, for example a plurality of vat dyes.

According to embodiments, the textile material includes dyed cellulosic fibers, preferably dyed cotton fibers. Dyed cellulosic fibers may include at least one dye selected from vat dyes, reactive dyes, pigments, direct dyes, sulfur dyes and mixtures thereof. According to embodiments, the textile material includes dyed cellulosic fibers, preferably dyed cotton fibers and the solvent is preferably a mixture of DMF and water and a base, optionally comprising a reducing agent. In other words, in embodiments, the solvent is preferably a mixture of DMF and alkali water, optionally further comprising a reducing agent. Suitable reducing agents can be selected from the group consisting of alkali metal hydrosulfites, sulfides, thiosulfates, and oxalates; thiourea dioxide; alkali metal sulfoxylate formaldehyde, hydroxy acetone and derivatives of sulphinic acid. For example, the reducing agent may be Na₂S₂O₄. Suitable bases are NaOH, KOH and mixtures thereof.

According to embodiments, the textile material comprises at least 50%, preferably 70%, by weight of polyester fibers and at most 50%, preferably 30%, by weight of cotton fibers, and at least part of said polyester fibers is dyed with at least one disperse dye, and at least part of said cotton fibers is dyed with at least a dye selected from vat dyes, reactive dyes, pigments, direct dyes and sulfur dyes. In this case, the solvent is preferably a mixture of DMF and water comprising base and optionally a reducing agent, and the temperature of said solvent (or said solution comprising solvent and extracted material) used in said step b), in said extraction chamber, and in the step of washing in the centrifuge after a first centrifugation. is in the range of from 85°C to 110°C, preferably about 95°C.

According to embodiments, the textile material comprises polyester fibers and further comprises at least a polyurethane material, preferably elastane, and at least a cellulosic material, preferably cotton, more preferably cotton fibers. For example, the textile material may comprise at least 50%, preferably 60%, more preferably 70%, by weight of polyester fibers and further comprise elastane and cellulosic fibers, for example at most 50%, preferably 40%, more preferably 30%, by weight of elastane and cotton fibers.

According to embodiments, the textile material comprises at least 50%, preferably 70%, by weight of polyester fibers and at most 50%, preferably 30%, by weight of cotton fibers and elastane fibers, and at least part of said polyester fibers is dyed with at least one disperse dye and wherein at least part of said cotton fibers is dyed with at least a dye selected from vat dyes, reactive dyes, pigments, direct dyes and sulfur dyes. In this case, the solvent is preferably a mixture of DMF and water comprising a base and optionally a reducing agent, and the temperature of said solvent (or said solution comprising solvent and extracted material) used in step b), in said extraction chamber, and in the step of washing in the centrifuge after a first centrifugation, is in the range of from 95°C to 105°C, preferably about 100°C.

According to embodiments, the textile material comprises at least 90% by weight of cotton fibers and at most 10% of elastane fibers, and at least part of the cotton fibers is dyed with at least a dye selected from vat dyes, reactive dyes, pigments, direct dyes and sulfur dyes. In this case, the solvent is preferably a mixture of DMF and water comprising a base and optionally a reducing agent, and the temperature of said solvent (or said solution comprising solvent and extracted material), used in step b), in said extraction chamber, and in the step of washing in the centrifuge after a first centrifugation, is in the range of from 95°C to 105°C, preferably about 100°C.

According to embodiments, the textile material consists of cotton fibers (i.e., it is 100% cotton), and at least part of the cotton fibers is dyed with at least a dye selected from vat dyes, reactive dyes, pigments, direct dyes and sulfur dyes. In this case, the solvent is preferably a mixture of DMF and water comprising a base and optionally a reducing agent, and the temperature of said solvent (or said solution comprising solvent and extracted material), used in step b), in said extraction chamber, and in the step of washing in the centrifuge after a first centrifugation, is in the range of from 85°C to 110°C, preferably about 95°C.

According to embodiments, the textile material may include a vat dye, optionally a plurality of vat dyes. According to embodiments, the textile material may include a mixture of disperse dyes and vat dyes

According to embodiments, the textile material includes a vat dye different from indigo, and said solvent (or the solution comprising solvent and extracted material) further includes water and a base, and optionally a reducing agent. Advantageously, the presence of a reducing agent allows the reduction of the vat dyes to the corresponding leuco form, so that said vat dyes are easily removed from the textile.

In embodiments, the vat dye is indigo. Advantageously, when the vat dye is indigo, the presence of water, base and reducing agents together with the solvent may not be required. In other words, indigo is removed by the solvent (DMF, DMAC or mixtures thereof) or by the solution comprising solvent and extracted material, whereby the presence of water and reducing agents may not be required. However, in embodiments, the vat dye is indigo and said solvent (or the solution comprising solvent and extracted material) further includes water and a reducing agent and a base.

According to embodiments, the textile material includes at least a cellulosic material, preferably cotton, more preferably cotton fibers, and indigo.

In embodiments, the solution obtained in step b) and/or c) is used as a solvent to extract dye from another batch of textile material up to 20 times, preferably up to 30 times, more preferably up to 40 times.

In embodiments, when a plurality of extractions steps is to be performed, each extraction in a different extraction chamber, the solvent (or the solution comprising solvent and extracted material) can be used for up to 20, preferably up to 40, more preferably up to 60 extraction cycles, i.e., 20, preferably 40, more preferably 60 extractions, i.e., for 20, preferably 40, more preferably 60 batches of waste textiles. For example, considering the use of three extraction chambers, for the first extraction chamber, the solvent can be used 20 times (depending on, e.g., the concentration of the dye on the waste textile), and the solvent used in second and third extraction chamber will also be used 20 times in the second and third extraction chamber. After the dye in the solvent (i.e., the solution comprising solvent and extracted material) in the first extraction chamber reaches a concentration wherein further dye extraction is impaired, the solvent in the second chamber, that has been already used 20 times is sent to first extraction chamber to be used, e.g., 20 times again. Similarly, the solvent in the third chamber, that has been already used 20 times is sent to second extraction chamber to be used, e.g., 20 times again. For example, dye extraction is impaired after that the solvent has been used for 60 extractions.

According to embodiments, the solution obtained in step b) and/or c) is used as a solvent to extract dye from another batch of textile material, and said steps b) and c) are repeated until the amount of extracted dye in said solution comprising solvent and extracted material reach a concentration whereby further dye extraction is impaired.

According to embodiments, the solution obtained in step b) and/or c) is used as a solvent to extract dye and optionally polyurethane (preferably elastane) from another batch of textile material, and in that said steps b) and c) are repeated until said solution comprising solvent and extracted material reach a viscosity whereby further dye extraction is impaired.

As used here, dye extraction is impaired means that the solvent used in the extraction step, namely in first extraction chamber, is no longer able to reduce the amount of dye in the waste textile. This may be verified by checking the concentration of dye in the solvent, i.e. the concentration of dye in the solution comprising solvent, dye and extracted material. In other words, at this point the solvent is saturated and has reached the end of its extraction capability based on the content of dyes and non-PET material. The saturation level of the solvent is determined by analyzing periodic samples taken from the non-saturated solution tank 9 and/or samples taken along the lines of the plant A.

According to embodiments, during said step b), said solvent, or said solution comprising solvent and extracted material, is circulated entering said extraction chamber and exiting said extraction chamber, through said textile material.

According to embodiments, during said step b), the rotation of the extraction chamber may be interrupted, and the solvent, or the solution comprising solvent and extracted material, can be circulated entering the extraction chamber and exiting the extraction chamber, through said textile material, to extract the textile material, . In this embodiment, the textile materials, e.g. fabrics or garments or fibers, are housed in the extraction chamber, which is still, i.e. static.

Another object of the present invention is an apparatus, (or plant) A for removing dyes from a textile material in a process according to the invention, the apparatus comprising at least one extraction chamber 2 configured to treat the textile material with the solvent, at least a centrifuge 3 for separating the solution comprising solvent and extracted material from the textile material, at least one fresh solvent storage tank 6 and at least one distillation device 5, wherein said fresh, i.e. clean, solvent storage tank 6 is provided with duct lines configured to feed said clean solvent to said extraction chamber 2 and to said centrifuge 3, and duct lines configured to receive said solvent from said distillation device 5, and wherein said distillation device is configured to receive said solution comprising solvent and extracted material from said said centrifuge 3.

According to embodiments, the extraction chamber is configured to horizontally rotate during operation, whereby the textile material is stirred within the extraction chamber. In embodiments, the extraction chamber rotates around its horizontal axis and includes baffles so that the textile material is moved during the extraction step along said horizontal axis from an inlet point of the extraction chamber to an outlet point on the opposite side of the extraction chamber. According to embodiments, the extraction chamber 2 does not rotate and comprises an impeller to stir said textile within the extraction chamber during operation; preferably the impeller is a paddle-type impeller having paddles distributed along its shaft.

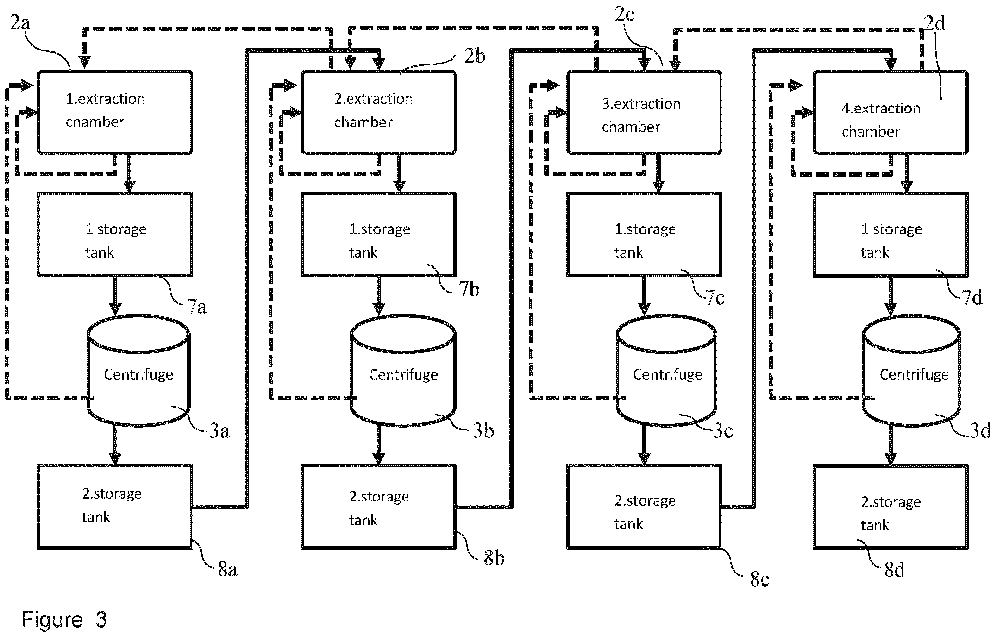

According to embodiments, the apparatus may further comprise at least one storage tank 7 (see fig.3), configured to receive the mixture of textile material and solvent from the extraction chamber, e.g. after step b) of the process, and to feed the textile material to the centrifuge, e.g. to perform step c).

According to embodiments, the apparatus may further comprise at least one non saturated solvent storage tank, configured to feed the solvent, i.e. the solution comprising solvent and extracted material, to the extraction chamber, and configured to receive the solution comprising solvent and extracted material from the extraction chamber and/or from the storage tank and/or from the centrifuge.

According to embodiments, the apparatus further comprises at least one distillation device 5, configured to receive the solution comprising solvent and extracted material from said extraction chamber, to separate said extracted material from said solvent. Preferably, the solution comprising solvent and extracted material from said extraction chamber is fed to said distillation device when the amount of extracted material in the solution comprising solvent and extracted material reach a concentration whereby further dye extraction is impaired. In embodiments, a suitable pressure value in the distillation device is in the range of 15 to 90 mbar, preferably 20 to 85 mbar, most preferably 40 to 80 mbar.

According to embodiments, the apparatus comprises a plurality of extraction chambers 2a-2d and a plurality of centrifuges 3a-3d; the extraction chambers and the centrifuges are arranged in a series and the apparatus further comprises means for feeding the textile material along said series of extraction chambers and centrifuges, to provide a flow of textile material, wherein at least one centrifuge is connected with an extraction chamber upwards with respect to the flow of textile and is connected to another extraction chamber downwards with respect to the flow of textiles.

According to embodiments, the centrifuge 3 is selected from vertical peeler type bottom discharge centrifuge, horizontal peeler type centrifuge, horizontal pusher type centrifuge, decanter type centrifuge. Preferably, the centrifuge comprises a filter wall located on a rotating drum to retain the textile pieces, a solvent feeding line and a scraper. The scraper has the aim of removing wet fabric pieces from the inner wall of the centrifuge, where they are deposited as a thick layer or as a circular cake after centrifugation. As mentioned, the extraction chamber preferably rotates around its horizontal axis or has a stirring means rotating internally, such as an impeller, is thermally insulated and is directly or indirectly connected by a duct D to the centrifuge to feed to said centrifuge the mixture of solvent and textile pieces obtained after the extraction step. According to a preferred embodiment, a duct line 14 is provided to feed clean solvent from clean solvent tank 6 to centrifuge 3 in order to carry out the previously discussed washing step with hot solvent within centrifuge 3 after a centrifugation step has been carried out. A filter 11 is advantageously located on the exit duct D2 to retain fibers and particles present in the solvent leaving centrifuge 3.

The apparatus A also comprises a quality control unit 10 where the amount of dyes present in the treated textile pieces after centrifugation and after washing, before drying, is determined. The amount of dye that is still present in the textiles can be determined according to techniques that are, per se, known in the art, for example color measurements with spectrophotometry, i.e. Datacolor. If dye is still present in the textiles in an unacceptable amount, the textile material is moved back to the extraction chamber to be extracted again, according to step b) of the process of the invention. If the dye has been sufficiently removed from the textiles, the textiles are moved to a drying unit 4. In a preferred embodiment a washing device 13 is located upstream of the drying unit to remove the solvent, namely DMF by washing the treated textile pieces with water

When the apparatus comprises a plurality of extraction chambers and a plurality of centrifuges, according to embodiments, each extraction chamber may be connected to the previous extraction chamber, with respect to the path followed by the textiles from a first extraction chamber to a following extraction chamber, with solvent feeding means, said solvent feeding means being configured to feed the solution comprising solvent and extracted material exiting from each extraction chamber to the previous extraction chamber.

When the apparatus comprises a plurality of extraction chambers and a plurality of centrifuges, according to embodiments, the last extraction chamber of the series is connected to a fresh solvent storage tank, said fresh solvent storage tank being configured to feed fresh solvent to said last extraction chamber.

When the apparatus comprises a plurality of extraction chambers and a plurality of centrifuges, according to embodiments, the apparatus may further comprise a plurality of storage tanks, each storage tank being arranged downwards to an extraction chamber and upwards to a centrifuge (i.e., between an extraction chamber and a centrifuge), with respect to the flow of textile, and/or each storage tank being arranged downwards to a centrifuge and upwards to an extraction chamber.

Further aspects and advantages in accordance with the present disclosure will be discussed more in detail with reference to the enclosed drawings, given by way of non-limiting example, wherein:
- Fig.1 shows a schematic representation of an embodiment of the process and apparatus of the invention including one extraction chamber and one centrifuge;
- Fig. 2 shows a schematic representation of an embodiment of the process and apparatus of the invention including two extraction chambers and two centrifuges;
- Fig.3 shows a schematic representation of an embodiment of the process including four extraction chambers and four centrifuges;
- Fig. 4 shows a schematic representation of an embodiment of the process and apparatus of the invention, including a mechanical treatment of the textiles before extraction and the quality control unit;
- Fig. 5 shows a schematic representation of an embodiment of the process and apparatus of the invention, including a washing unit for the textiles after the quality control unit;
- Fig. 6 is a photograph showing the aspect of textile material (small pieces of polyester fabric) at different steps of the process.

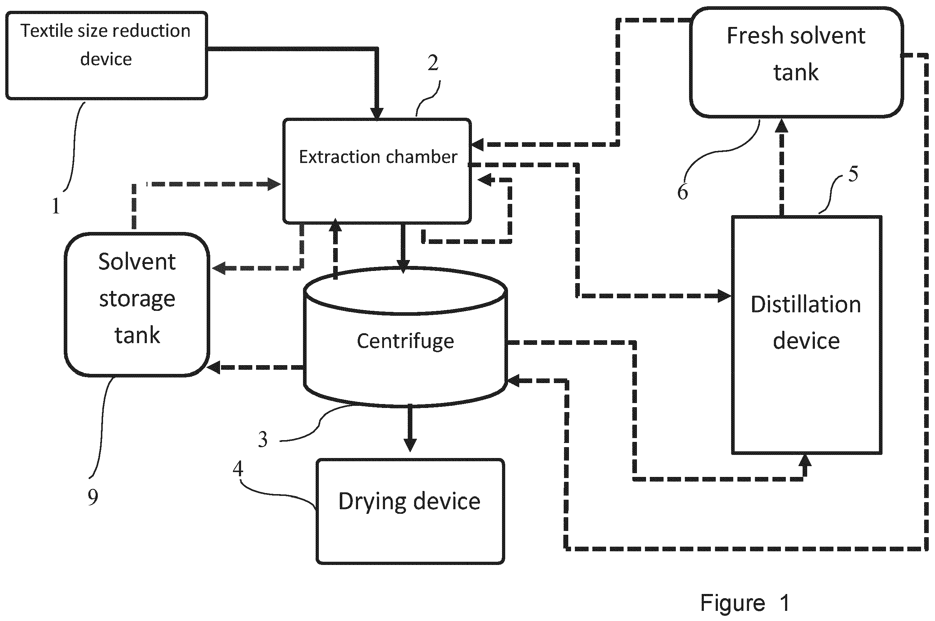

In figures 1 to 3, continuous arrows schematically represent the flow of the textile material while dashed arrows schematically represents the flow of the solvent and/or the solution comprising solvent and the extracted material.

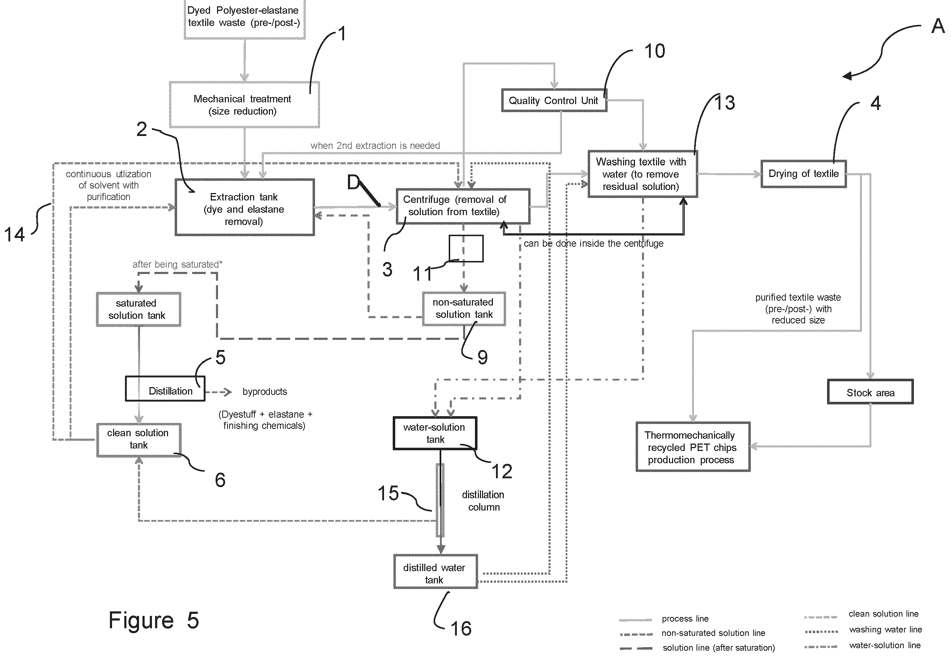

With reference to the exemplary embodiment of fig. 1, the waste textile material is collected and pre-treated to reduce the size of the textile in a textile size reduction device 1. For example, the textile size reduction device 1 can be a cutter or other machine, suitable for reducing fabrics and garments into pieces having a reduced size, i.e., clippings, or a machine suitable for converting fabrics and/or garments into fibers. The size of the pieces of fabric has been previously disclosed in the description: a sample of green-blue polyester fabric reduced to pieces having a size that is at least 90% in the range 2.0mm to 2.5mm is shown under reference 1 in figure 5.

The textile material, after size-reduction pre-treatment, is moved to an extraction chamber 2. For example, the extraction chamber may be selected from single/double shaft mixer, wash screw, washing machine like reactors, cleaning machines using solvent. In embodiments, extraction chamber 2 has a horizontal rotation axis and a rotating drum; in embodiments the extraction chamber is provided with a rotating impeller, preferably a paddle-like impeller.

In extraction chamber 2, the textile material, namely the fabric pieces, is extracted (treated) with a solvent, to provide a solution comprising solvent and extracted material, said extracted material including at least a dye and polyurethanic material if initially present on the textile. The textile material is stirred within said extraction chamber 2, e.g., by rotating the extraction chamber 2 or by means of an impeller without rotating the extraction chamber 2, during at least part of said extracting step, preferably during the entire extraction step.

According to embodiments, extraction step b) has a duration of from 2 minutes to 20 minutes, preferably from 5 min to 15 min, more preferably from 7.5 min to 12.5 min., most preferably 10 min.

According to embodiments, the temperature of the solvent (or the solution comprising solvent and extracted material) in the extraction chamber 2 is in the range of from 80°C to 140°C, preferably from 82°C to 135°C. Preferred solvent is DMF optionally including an aqueous basic solution, according to the dyes to be removed.

Advantageously, the conditions of the extraction step b) can be adjusted according to the composition of the textile material to be treated.

For example, when the textile material is in the form of 100% PET fabrics and/or clippings, dyed with at least one disperse dye, the solvent is preferably DMF, and the temperature of said solvent in said extraction chamber 2 may be in the range of from 85°C to 105°C, preferably about 100°C. For example, when the textile material is in the form of 100% PET fibers dyed with at least one disperse dye, the solvent is preferably DMF, and the temperature of said solvent in said extraction chamber 2 may be in the range of from 80°C to 110°C, preferably from 85°C to 105°C. For example, when the textile material is in the form of clippings (i.e., pieces of fabrics and/or garments) consisting of polyester fibers, and at least part of said polyester fibers is dope-dyed. In this case, the solvent is preferably DMF, and the temperature of said solvent (or said solution comprising solvent and extracted material) used in said step b) in said extraction chamber2 may be in the range of from 80°C to 140°C, preferably from 85°C to 130°C. For example, when the textile material comprises at least 90% by weight of polyester fibers, dyed with at least one disperse dye, and at most 10% by weight of elastane fibers, the solvent is preferably DMF, and the temperature of said solvent in said extraction chamber 2 may be in the range of from 85°C to 105°C, and preferably is about 95°C. For example, when the textile material comprises at least 70% by weight of polyester fibers and at most 30%, by weight of cotton fibers or of a mixture of cotton fibers and elastane, and the polyester fibers are dyed with at least one disperse dye, and the cotton fibers are dyed with at least a dye selected from vat dyes, reactive dyes, pigments, direct dyes and sulfur dyes, the solvent is preferably a mixture of DMF and water comprising a reducing agent and a base, and the temperature of said solvent in said extraction chamber 2, is in the range of from 95°C to 105°C, preferably about 100°C.

For example, when the textile material comprises at least 90% by weight of cotton fibers and at most 10% of elastane fibers, and the cotton fibers is dyed with at least a dye selected from vat dyes, reactive dyes, pigments, direct dyes and sulfur dyes, in this case, the solvent is preferably a mixture of DMF and water comprising a reducing agent and a base, and the temperature of said solvent in said extraction chamber 2, is in the range of from 95°C to 105°C, preferably about 100°C. For example, when the textile material consists of cotton fibers (i.e., it is 100% cotton), and the cotton fibers are dyed with at least a dye selected from vat dyes, reactive dyes, pigments, direct dyes and sulfur dyes, the solvent is preferably a mixture of DMF and water comprising a reducing agent and a base, and the temperature of said solvent in said extraction chamber 2, is in the range of from 85°C to 110°C, preferably about 95°C.

After step b) a solution comprising solvent and extracted material (i.e., at least one extracted dye and, optionally, extracted polyurethane materials such as elastane) is obtained, together with treated textiles.

In embodiments, solution comprising solvent and extracted material can be recirculated during step b), by exiting and entering the extraction chamber 2, both during stirring of the textiles within the extraction chamber 2 or during interruption of the stirring of the textiles within the extraction chamber 2, i.e., while keeping both the textiles and the extraction chamber 2 in a static (i.e., still) condition.

According to embodiments, at the end of step b), the mixture of textiles and solvent are moved to a centrifuge 3 for removal of the residual solution comprising solvent and extracted material in the textiles, according to step c). Preferably centrifuge 3 is different from the extraction chamber. In embodiments, centrifuging can be carried out in the extraction chamber. For example, when the extraction chamber is a washing machine or a solvent cleaning machine, the extraction chamber may perform centrifugation and drying. In embodiments, extraction, centrifugation, washing, drying can be performed in one machine, e.g., in a solvent cleaning machine; the same machine can further include a distillation unit.

In embodiments, the solvent that has not been picked up by the textiles can be removed from the extraction chamber 2 and fed to a solvent storage tank 9. The solvent storage tank 9 is further configured to receive the solvent removed from at least the centrifuge 3 and, optionally, from the drying device 4. The solvent in the solvent storage tank 9 is generally a solution comprising solvent and extracted material. The solvent (or the solution comprising solvent and extracted material) can be fed from the solvent storage tank 9 to the extraction chamber 2.

According to embodiments, centrifugation is carried out at g-force in the range of from g-force from 250 to 5000, preferably from 800 and 2000, more preferably from 900 to 1300, for a time in the range of from 0.5 to 10 minutes, preferably from 1 to 5 minutes. In embodiments, after centrifugation, the solution of solvent and extracted material is moved back to the extraction chamber 2 for treating another batch of textile material, e.g., a new batch of textile material.

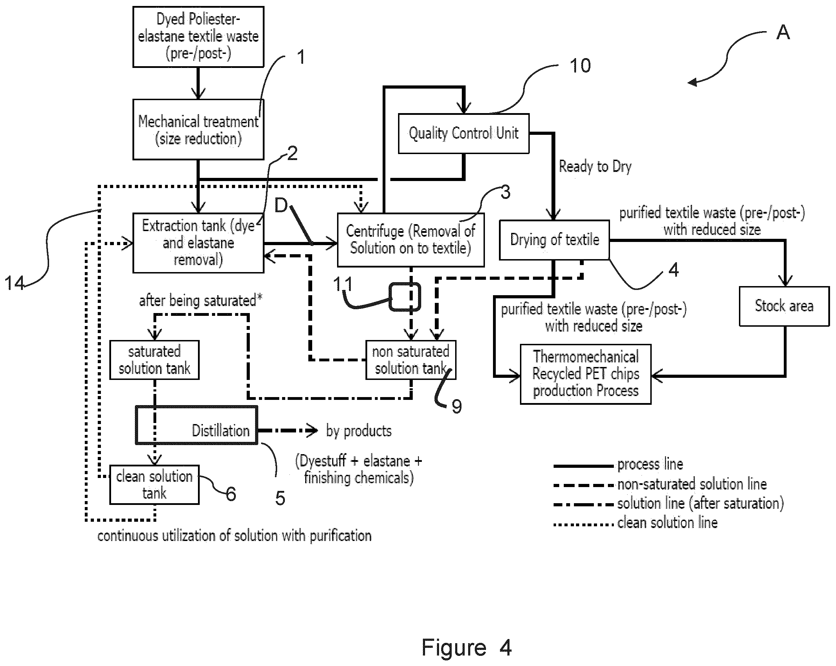

In embodiments, after centrifugation, the textile material may be washed within the centrifuge 3. The washing can be performed, for example, using fresh, i.e. clean, solvent or a fresh mixture of solvent, water, a reducing agent and a base, according to the material to be washed. The fresh solvent or fresh mixture of solvent, water, a reducing agent and a base, are fed to the centrifuge 3 from the fresh solvent tank 6 with line 14 (see fig. 4). The washing step with clean solvent is carried out at the temperature at which the extraction is carried out in extraction chamber 2. Thus clean solvent is fed to centrifuge 3 heated to the temperature required to reach such hot washing temperature. The washed material is centrifuged again to remove the solvent used for washing. The used solvent or the mixture of solvent, water, a reducing agent and a base is recovered and preferably moved to the extraction chamber 2 for treating another batch of textile material.

According to Fig. 1, after centrifugation, the textile material is dried in a drying device 4.

When the extracted material in the solution comprising solvent and the extracted material reaches a concentration whereby the solvent is saturated and further dye extraction is impaired, the solution comprising solvent and extracted material is fed to a saturated solution tank and from this tank to distillation device 5, whereby said solvent is separated from said extracted material. Distilled solvent is, then, moved to fresh tank solvent 6 for storage. When required, fresh solvent can be fed from the fresh solvent tank 6 to at least the extraction chamber 2, for example, to adjust the bath ratio textile:solvent. As above mentioned, fresh solvent can be fed from the fresh solvent tank 6 to the centrifuge 3 to perform washing of the textiles.

In an embodiment said textile material is selected from polyester fibers, fabrics consisting of polyester fibers, fabric clippings consisting of polyester fibers, polyester fibers ground into polyester powder, wherein at least part of said polyester fibers is dyed with at least one disperse dye, wherein said solvent is DMF, wherein the temperature of said solvent or said solution comprising solvent and extracted material in said extraction chamber and in the step of washing in the centrifuge after a first centrifugation, is in the range of 80°C to 110°C, preferably from 85°C to 105°C for polyester fibers and is in the range of from 85°C to 110°C, preferably about 95°C for said fabrics, fabric clippings and polyester powder.

In an embodiment said textile material is clippings consisting of polyester fibers, wherein at least part of said polyester fibers is dope-dyed, wherein said solvent is DMF, wherein the temperature of said solvent or said solution comprising solvent and extracted material in said extraction chamber and in the step of washing in the centrifuge after a first centrifugation, is in the range of from 80°C to 140°C, preferably from 85°C to 130°C.

In an embodiment, said textile material comprises at least 90% by weight of polyester fibers and at most 10% by weight of elastane fibers, wherein at least part of said polyester fibers is dyed with at least one disperse dye, wherein said solvent is DMF, wherein the temperature of said solvent or said solution comprising solvent and extracted material in said extraction chamber and in the step of washing in the centrifuge after a first centrifugation, is in the range of from 85°C to 105°C, preferably about 95°C.

In an embodiment said textile material comprises at least 50%, preferably 70%, by weight of polyester fibers and at most 50%, preferably 30%, by weight of cotton fibers, wherein at least part of said polyester fibers is dyed with at least one disperse dye and wherein at least part of said cotton fibers is dyed with at least a dye selected from vat dyes, reactive dyes, pigments, direct dyes and sulfur dyes, wherein said solvent is a mixture of DMF and water comprising at least one base and optionally at least one reducing agent, wherein the temperature of said solvent or said solution comprising solvent and extracted material in said extraction chamber and in the step of washing in the centrifuge after a first centrifugation, is in the range of from 85°C to 110°C, preferably about 95°C.

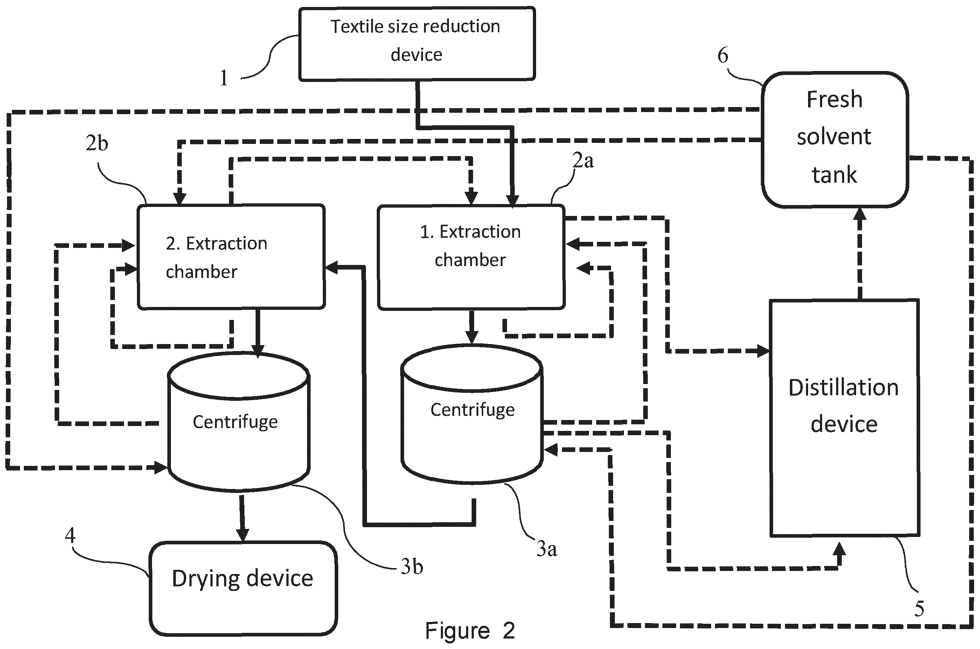

Fig. 2 shows a schematic representation of an embodiment of the process and apparatus of the invention including two extraction chambers (2a and 2b) and two centrifuges.

With reference to the exemplary embodiment of fig. 2, the waste textile material is collected and pre-treated to reduce the size of the textile in a textile size reduction device 1. The textile material, after size-reduction pre-treatment, is moved to a first extraction chamber 2a. In the extraction chamber 2a, the textile material is extracted (treated) with a solvent, to provide a solution comprising solvent and extracted material, said extracted material including at least a dye. Preferably, when the apparatus incudes more than one extraction chamber, the solvent used in the first extraction chamber is the solution comprising solvent and extracted material obtained in the second extraction chamber after the second extraction step b) carried out on the previous batch of textiles that have been treated. The textile material is stirred within said extraction chamber 2a, e.g., by rotating the extraction chamber 2a or by means of an impeller without rotating the extraction chamber 2a, during at least part of said extraction step, preferably during the entire extraction step.

In embodiments, the obtained solution comprising solvent and extracted material can be recirculated during step b), by exiting and entering the first extraction chamber 2a, both during stirring of the textiles within the extraction chamber 2a or during interruption of the stirring of the textiles within the extraction chamber 2a, i.e., while keeping both the textiles and the extraction chamber 2 in a static (i.e., still) condition.

According to embodiments, at the end of step b), the textiles are moved from the first extraction chamber 2a to a first centrifuge 3a for removal of the residual solution comprising solvent and extracted material in the textiles, according to step c). According to embodiments, centrifugation is carried out at a g-force from 250 to 5000 preferably from 800 and 2000, more preferably from 900 to 1300, for a time in the range of from 0.5 to 10 minutes, preferably from 1 to 5 minutes. In embodiments, after centrifugation, the solution of solvent and extracted material is fed back to the extraction chamber 2 for treating another batch of textile material.

The textile material, after centrifugation, is moved from the first centrifuge 3a to a second extraction chamber 2b. In the second extraction chamber 2b, the textile material is further extracted (treated) with a solvent, to provide a solution comprising solvent and extracted material, said extracted material including at least a dye. Preferably, when the apparatus incudes more than one extraction chambers, the solvent used in the second extraction chamber may be fresh solvent. The textile material is stirred within said extraction chamber 2b, e.g., by rotating the extraction chamber 2b or by means of an impeller without rotating the extraction chamber 2b, during at least part of said extracting step, preferably during the entire extracting step.

In analogy to the embodiment of Figure 1, with reference to Figure 2, in embodiments, the solvent that has not been picked up by the textiles can be removed from the extraction chambers 2a and 2b and fed to at least one solvent storage tank (not shown in the figures). The at least one solvent storage tank is further configured to receive the solvent removed from at least the centrifuges 3a and 3b and, optionally, from the drying device 4. The solvent in the solvent storage tank is generally a solution comprising solvent and extracted material. The solvent (or the solution comprising solvent and extracted material) can be fed from the at least one solvent storage tank to the extraction chambers 2a and 2b.

In embodiments, in multiple extraction process, all extraction chambers will be fed with fresh solvent in the beginning of the process (i.e., for treating the first batch of waste textiles) and the solvent will be re-used in the same extractors till reaching the saturation point, i.e., a condition wherein the extracted material in the solvent reach a concentration whereby further dye extraction is impaired, e.g., after extraction of at least 20 batches, preferably at least 30, more preferable at least 40, for example 50. Starting from the second batch of waste textile to be treated, fresh solvent is fed only to the last extraction chamber.

In embodiments, the obtained solution comprising solvent and extracted material can be recirculated during step b), by exiting and entering the second extraction chamber 2b, both during stirring of the textiles within the extraction chamber 2b or during interruption of the stirring of the textiles within the extraction chamber 2b, i.e., while keeping both the textiles and the extraction chamber 2b in a static (i.e., still) condition.

At the end of step b), the textiles are moved from the second extraction chamber 2b to a second centrifuge 3b for removal of the residual solution comprising solvent and extracted material in the textiles, according to step c). In embodiments, after centrifugation, the solution of solvent and extracted material is moved back to the second extraction chamber 2b for treating another batch of textile material.

Preferably, the solution comprising solvent and extracted material obtained after one or more extraction steps in the second extraction chamber 2b is fed to the first extraction chamber 2a to extract a different batch of textiles.

In embodiments, after centrifugation in the second centrifuge 2b, the textile material may be washed with hot clean solvent within the second centrifuge 3b. The washed material is centrifuged to remove the solvent used for washing. The solvent or the mixture of solvent, water and a reducing agent and a base is recovered and preferably moved to the second extraction chamber 2b for treating another batch of textile material.

According to Fig. 2, after the second centrifugation in the second centrifuge 3b, the textile material is dried in a drying device 4.

When the extracted material in the solution comprising solvent and an extracted material reach a concentration whereby the solvent is saturated and further dye extraction is impaired, the solution comprising solvent and extracted material is fed, from said first extraction chamber 2a and/or from said first centrifuge 3a, to a distillation device 5, whereby said solvent is separated from said extracted material. Distilled solvent is, then, moved to a fresh tank solvent 6 for storage. When required, fresh solvent can be fed from the fresh solvent tank 6 to at least the second extraction chamber 2b, for example, to adjust the bath ratio textile:solvent. As above mentioned, fresh solvent can be fed from the fresh solvent tank 6 to the second centrifuge 3b to perform washing of the textiles. Optionally, fresh solvent can be fed from the fresh solvent tank 6 to the first centrifuge 3a, to perform washing of the textile.

Fig.3 shows a schematic representation of an embodiment of the process including a plurality (four) extraction chambers and a plurality (four) of centrifuges.

In the embodiment of Fig. 3, a plurality of storage tanks, particularly a plurality of first storage tanks 7a, 7b, 7c, 7d and a plurality of second storage tanks 8a, 8b, 8c, 8d are shown. One first storage tank 7a, 7b, 7c, 7d is provided after each extraction chamber 2a, 2b, 2c, 2d and one second storage tank 8a, 8b, 8c, 8d is provided after each centrifuge 3a, 3b, 3c, 3d.

According to embodiments, the textile material obtained in step b), i.e., the textile material after extraction with solvent, can be moved from extraction chambers 2a, 2b, 2c, 2d to first storage tanks 7a, 7b, 7c, 7d, for example, when the centrifuges 3a, 3b, 3c, 3d are not able to hold the entire amount of textile material treated in the reaction chambers 2a, 2b, 2c, 2d, the textile material obtained in step b) can be moved from the extraction chambers 2a, 2b, 2c, 2d to first storage tanks 7a, 7b, 7c, 7d so that a further batch of textile material can be extracted in the extraction chambers 2a, 2b, 2c, 2d, while the centrifugation of the textile material obtained in step b) is completed.

In the embodiment of Fig. 3, the textile material exiting from the centrifuges 3a, 3b, 3c 3d is moved to second storage tanks 8a, 8b,8c, 8d. The material in the first three second storage thanks 8a, 8b, 8c in then fed to the subsequent extraction chamber (i.e., extraction chamber 2b, 2c, 2d) for further extraction. The textile material in the last second storage tank 8d is free, or substantially free, of dye and possible polyurethane and is ready to be dried.

In embodiments, the solution comprising solvent and extracted material obtained in each extraction chamber can be recirculated during step b), by exiting and entering the same extraction chamber, both during stirring of the textiles within the extraction chamber or during interruption of the stirring of the textiles within the extraction chamber, i.e., while keeping the extraction chamber in a static (i.e., still) condition.

In embodiments, after centrifugation, the solution of solvent and extracted material is moved back to the previous extraction chamber for treating another batch of textile material. For example, with reference to Fig. 3, the solution of solvent and extracted material obtained after centrifugation in centrifuge 3a is moved back to extraction chamber 2a, the solution of solvent and extracted material obtained after centrifugation in centrifuge 3b is moved back to extraction chamber 2b, the solution of solvent and extracted material obtained after centrifugation in centrifuge 3c is moved back to extraction chamber 2c and the solution of solvent and extracted material obtained after centrifugation in centrifuge 3d is fed back to extraction chamber 2d.

According to the embodiment of Fig. 3, the solvent used in the last extraction chamber 2d may be fresh solvent. After the extraction, a solution including solvent and extracted material is obtained. The solution including solvent and extracted material obtained in the last (fourth) extraction chamber 2d may be fed to the previous (third) extraction chamber 2c, for the third extraction step of the subsequent batch of textiles, particularly, after that the solvent, i.e., solution comprising solvent and extracted material, used in first extraction tank 2a reached a concentration of extracted material whereby further dye extraction is impaired, and the solution comprising solvent and extracted material is moved from the first extraction chamber 2a to the distillation device. The solution including solvent and extracted material obtained in the third extraction chamber 2c may be fed to the previous (second) extraction chamber 2b, for the second extraction step of the subsequent batch of textiles. The solution including solvent and extracted material obtained in the second extraction chamber 2b may be fed to the previous (first) extraction chamber 2a, for the first extraction step of the subsequent batch of textiles. Advantageously, the amount of dye in the textile is progressively reduced from the first extraction chamber 2a to the last extraction chamber 2d, while the concentration of the extracted material, particularly dye, in the solvent (i.e., the solution comprising solvent and extracted material) used in the extraction steps decreases the first extraction chamber 2a to the last extraction chamber 2d. In other words, the solution including solvent and extracted material obtained in the last (fourth) extraction chamber 2d is sent to the third extraction chamber 2c, for the third extraction step of the subsequent batch of textiles, after that the solvent used in first extraction chamber 2a is sent to distillation device, and the solvent used in the second extraction chamber 2b is sent to the first extraction chamber 2a, and the solvent used in the third extraction chamber 2c is sent to the second extraction chamber 2b.

Figure 4 shows an embodiment of the process and apparatus of the invention. In Figure 4, it is indicated that the starting material is dyed polyester-elastane textile waste; however, process and apparatus disclosed with reference to the illustrative embodiment of Figure 4 applies to all suitable starting textile materials according to the invention.

In the embodiment according to Fig. 4, a batch of dyed polyester-elastane textile waste material (both pre-consumer, post-industrial or post-consumer) is provided. The textile material is mechanically treated to obtain clippings, or small pieces, having size from 1 mm to 50, mm depending on the nature of the fibers present in the fabric, preferably from 2 mm to 10 mm, more preferably from 2 mm to 2.5 mm. The textile material in the form of small clippings of the above mentioned dimension is provided to extraction chamber 2. In the extraction chamber, the textile material is extracted with a solvent to provide a solution comprising solvent and extracted material (in this case, dye and elastane). The bath ratio (kg:liters) kg of textile to liters of solvent preferably is in the range of 1:10 to 1:20, preferably 1:13 to 1:15.

After the extraction, the mixture of solvent and textile material is moved to a centrifuge 3 along duct D. In the centrifuge, the textile material is centrifuged to separate the solution of solvent and extracted material from the textile material. A washing step is carried out on the textile pieces after solvent removal in the centrifuge. Preferably, the washing is carried out at the temperature required for extraction in the centrifuge using hot clean solvent that is fed to the inner part of the centrifuge by means of a solvent feeding line 14. During washing the centrifuge is rotated at a reduced speed, i.e. a speed that is effective to wash the textile pieces, preferably in the range of 300 to 700 rpm, preferably 400 to 600 rpm. The washing is preferably carried out for a time in the range of 3 to 10 minutes, more preferably about 5-6 minutes are enough to remove the remaining dye. After washing, the textiles are centrifuged again to recover the residual solvent on textiles used in washing step. The final content of solvent in the textile pieces after centrifugation is generally about 4-7% by weight: this provides the advantage of having a "cake" in the form of a thick layer, (i.e. a layer of compacted textiles pieces deposited along the wall of the centrifuge and providing a central free area) of small pieces of fabric that are adhering to the lateral wall of the centrifuge. Such layer of compacted textile pieces can be easily removed from said wall by, e.g., a scraper mounted on the door of the centrifuge and a hopper to receive the scraped-off wet textiles pieces including a screw feeding the collected textile particles outside the centrifuge.

After centrifugation and washing steps, quality control unit 10 determines the amount of dye (and possibly elastane) that may still be present in the textiles, according to techniques that are, per se, known in the art. If the dye (and/or elastane) is still present in the textiles in an unacceptable amount, the textile material is moved back to the extraction chamber to be extracted again. If the dye has been sufficiently removed from the textiles, the textiles are dried in a drying device 4.

The dried textile polyester material with reduced size is at this point ready to be subjected to a thermomechanical process to provide recycled PET chips, not an object of the present invention; the clean textile material may be stored in a stock area.

The "process line" according to fig. 4, schematically shows the path that is followed by the textile material according to the process and plant of fig. 4. The solution of solvent and extracted material recovered from centrifugation, after filtration in filter 11, and from drying of textile is sent to non saturated solution tank 9. If the amount of extracted dye (and elastane) in said solution comprising solvent and extracted material is not in a concentration whereby further dye and/or elastane extraction is impaired (i.e., the solution is "non saturated"), the solution is fed back to the extraction chamber to extract a subsequent batch of textile material. If the amount of extracted dye (and elastane) in said solution comprising solvent and extracted material is in a concentration whereby further dye and/or elastane extraction is impaired (i.e., the solution is "saturated"), the solution is moved to a "saturated storage tank" and then fed to a distillation device 5, wherein the solvent is separated from the extracted material (e.g., dye, elastane and any finishing chemical) and recovered. The term "saturated" refers to a solution or solvent that reached the end of its extraction capability based on input content non-PET material. The saturation level can be analyzed by periodic sampling from the storage tank containing non-saturated solution and/or by means of in-line in-house measurements. The solvent after distillation, i.e., "fresh" solvent, is stored in a clean solvent storage tank 6. Fresh solvent can be provided from the storage tank to the extraction chamber for extracting textile material and to the centrifuge for washing the textile material after centrifugation. The "non-saturated solution line" according to fig. 4, schematically shows the path that is followed by the solution of solvent and extracted material wherein the concentration of the extracted material is so that further dye and/or elastane extraction is not impaired. The "solution line (after saturation), schematically shows the path that is followed by the solution of solvent and extracted material wherein the concentration of the extracted material is so that further dye and/or elastane extraction is impaired, according to the process and plant of fig. 4. The "clean solution line" according to fig. 4, schematically show the path that is followed by the solvent (i.e., the solvent recovered after distillation), according to the process and plant of fig. 4.

Figure 5 shows an embodiment of the process and apparatus of the invention that corresponds to the process and apparatus of fig. 4 and that further includes a washing device 13 located upstream of the drying unit 4 to remove the solvent, namely DMF, by washing the treated textile pieces with water. Said washing with water may be carried out in the centrifuge 3. The water containing DMF or other solvent is fed to a water-solution tank 12 where it is stored. From tank 12 the water-solvent solution is sent to distillation column 15 in order to separate the solvent from water; solvent is fed to clean solvent tank 6, distilled water is sent to a water tank 16 for storage before further use in the process. In addition to the flow lines shown in Figure 4, Figure 5 shows a washing water line and a water-solution line.

Figure 4 and figure 5 thus provide evidence that the apparatus, i.e. the plant, of the present invention is a fully closed-loop plant for a closed-loop process whereby the solvent used (including water) is totally recovered and reused in the process. Actually it was found that typically 99.9% of the solvent is recovered and reused.

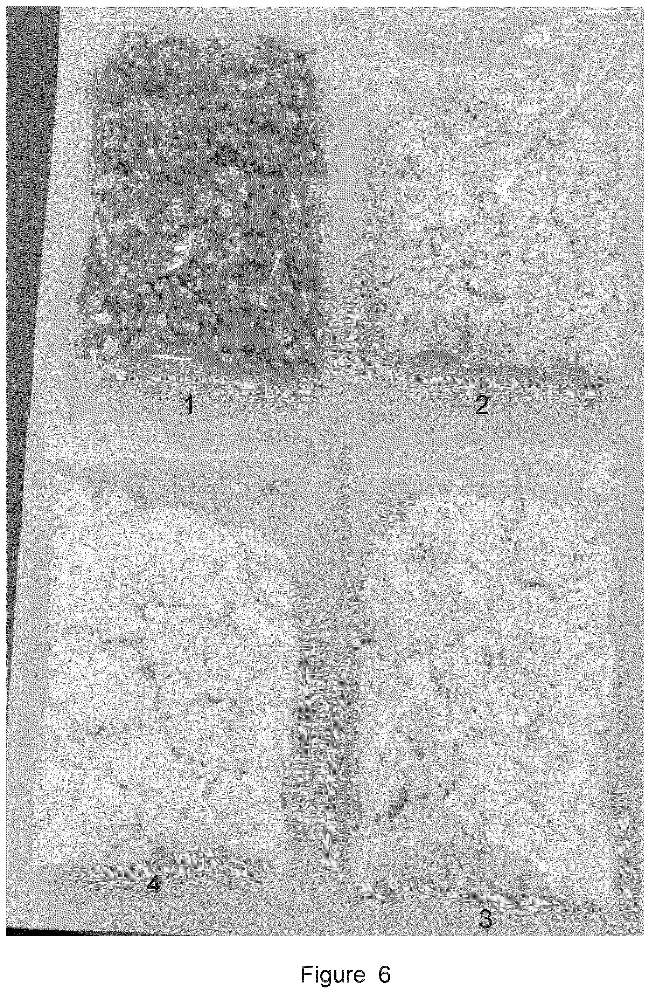

Figure 6 visually shows the reduction in dye content from the initial polyester material in reduced size 1 to the same material after extraction, ref. 2, the extracted material 2 after hot washing in a centrifuge, ref. 3, and the washed material 3 after a final extraction in extraction chamber with reference 4.

The invention will be further illustrated by reference to the following non limiting examples.

### EXAMPLE 1 (only stirring, with impeller)

*100 g of waste textiles (100 % PET dyed with disperse dyes) were grinded to obtain fine powder. The powder was put into an extractor and 600 ml of solvent (DMF) were added. The extraction chamber was heated to 90-100°C and stirred with mechanical stirrer (with impeller). Extraction was completed in 10 minutes and the powder was directly sent to centrifuge to remove solvent from powder in hot conditions. Vertical centrifuge was used for 2-3 min. at 1250 g-force. Afterwards, sample was sent to a dryer. In 10 minutes at 75°C all powder is obtained as dry form. All solvents regain in extraction, centrifuge and drying processes were collected together in order to use the collected solvent in the same extractor for the extraction of a new batch.*

### EXAMPLE 2 (stirring by rotation of the extraction chamber + circulation of the solvent)

*5 kg of 100% PET waste textiles dyed with disperse dyes (garments) were put into the extractor. After addition of 50 L solvent (DMF) into the extractor, the extraction chamber was heated up to 95°C and the extractor (i.e., extraction chamber) is horizontally rotated for 15 min, at an average rotation speed of 50 rpm. The solvent was circulated during extraction to increase the extraction efficiency. The excess amount of solvent was re-collected before and after centrifuge process that was performed at hot condition (80-90°C) for 2-3 min at relatively high g-forces. Since the garments have less surface area comparing to fabrics, yarn, and fibers second extraction is needed to remove all dyes on to the waste textiles (in general, it depends the concentration of the dyes on the textiles). Therefore, waste textiles (coming from the first extraction) were sent to second extraction chamber. All parameters in extraction and centrifuge processes were the same. After second centrifuge, textiles were dried at 75-80°C for 10 min. The solvent exiting the first extraction and the first centrifuge tank was collected and sent to first extraction tank for the extraction of new batch. The solvent exiting from second extraction and second centrifuge tanks were also sent to second extraction tank for the extraction of new batch.*

### EXAMPLE 3 (stirring by rotation of the extraction chamber + circulation of the solvent)

*100 g of 100% cotton waste textiles dyed with vat and reactive dyes were put into the extractor and extraction chamber was heated at 90-95°C. 1 L of solvent (DMF) was poured into the extractor and textiles were kept for 10 min. After 10 min. extraction with horizontal rotation of the extraction chamber and circulation of the solvent, textiles were sent directly to the centrifuge and solvent was removed at 1200 g-force for 2-3 min. Afterwards textiles were sent to second extractor and 1 L of DMF:water (in presence of reducing agent and base) were poured into it to remove remaining dyes at 90-95°C for 10 min. Drying process at 80-90°C were conducted after second centrifuge process. The solvents are re-collected and re-used as per the previous examples.*

### EXAMPLE 4 (scaled up production)

*400 kg of 100% PET textile waste dyed with light brown disperse dyes was processed through a closed-loop extraction and preparation protocol for recycled PET chip production. The textile waste was first mechanically treated to be reduced to small pieces having size in the range of 1-15 mm with at least 90% by weight of the treated textile having a dimension in the range of 2.0 mm to 2.5 mm. The material was then transferred to an insulated extraction chamber (a tank) where the solvent was fed. The extraction process was carried out at 90 °C for 10 minutes with a bath ratio of 1:14 (textile kg : solution liters), by rotating a paddle type impeller housed in the extraction chamber around its horizontal axis to stir the textiles. The solvent was dimethyl formamide (DMF). After extraction, the wet textile material including the solvent was transferred directly into a centrifuge, which was operated dynamically at a g-force in the range of from 900 to 1300 for 240 seconds to remove the excess extraction solution. An additional washing step was applied for 6 minutes at 500 rpm using clean DMF solvent at 90 °C to improve dye removal in the centrifuge. After washing, another centrifugation is carried out to remove solvent. The centrifugated textiles were then transferred to a drying unit as the color had reached the proper level (in quality control unit*/*tank), to remove residual solution. Once fully dried, the materials were sent to a recycled PET chip production facility for further processing. The extraction solution used throughout the process was recovered from both the centrifuge and the drying stage and reused in a closed-loop system until reaching saturation. The saturated solution was then sent to a distillation plant for purification and reuse. The entire system operates in a closed loop, ensuring minimal solvent loss and supporting sustainable, efficient processing.*

### EXAMPLE 5 (scaled up production )

*400 kg of 100% PET textile waste dyed with light blue disperse dyes were processed through a closed-loop extraction and preparation protocol for recycled PET chip production according to process described in example 4. The initial material is shown in* *fig 6* *under reference 1. The extracted textile pieces are shown in* *fig. 6* *under reference 2 and the textile material after centrifugation, washing and centrifugation is shown in* *fig. 6* *under reference 3. After checking in control unit, the treated textile material of reference 3 was sent again to the extraction chamber for further extraction of the dye. The textile material after said second extraction was centrifuged and dried to provide the material shown in* *fig. 6* *under reference 4.*

The claimed process and apparatus thus allow to remove dyes from waste textiles, particularly disperse dyes from polyester fibers and vat dyes, reactive dyes, pigments, direct dyes and sulfur dyes from cotton fibers. The resulting textiles may then be recycled in a way known per se.

## Claims

1. A process for removing dyes from a textile material, particularly a waste textile material, said textile material including a dye and 50% by weight, preferably at least 60% by weight, more preferably at least 70% by weight, of polyester fibers, or said textile material comprising a dye and including at least 80% by weight, preferably at least 90% by weight of cellulosic fibers, said process comprising the following steps:
a) providing said textile material and a solvent suitable to remove said dye from said textile in an extraction chamber to provide a mixture of textile and solvent;
b) extracting said textile with said solvent to provide a solution comprising solvent and extracted material, said extracted material including at least said dye, wherein said textile material and said solvent are stirred within said extraction chamber, during at least part of said extraction step, preferably during the entire extracting step;
c) removing said solution of solvent and extracted material from said textile; **characterized in** comprising the steps of
a1) reducing said textile material into pieces having maximum dimension of 5 cm prior to providing said textile pieces to said extraction chamber;
b1) after step b), feeding said mixture of solvent and pieces of textile to means to perform said step c), preferably a centrifuge;
c1) feeding solvent to said textile pieces after step c) to wash said textile and remove dye from said textile;
wherein the bath ratio of textile (kg) to solvent (liters) is within the range of 1:3 (kg/l) to 1:20 (kg/l) and wherein at least in said steps a), b) and c1) the temperature of said solvent is in the range of 80°C to 140°C.

2. A process for removing dyes from a textile material, particularly a waste textile material, wherein said textile material includes at least 50% by weight, preferably at least 60% by weight, more preferably at least 70% by weight, of polyester, or wherein said textile material includes at least 80% by weight, preferably at least 90% by weight of cellulosic fibers, said process comprising the following steps:
a) providing a batch of said textile material in an extraction chamber;
b) extracting said batch of said textile with a solvent to provide a solution comprising solvent and extracted material, said extracted material including at least a dye, wherein said textile material and said solvent are stirred within said extraction chamber, during at least part of said extracting step, preferably during the entire extracting step;
c) removing said solution of solvent and extracted material from said textile;
**characterized in that** said solution comprising solvent and extracted material obtained in step b) and/or c) is used as a solvent to extract dye from another batch of textile material, and **in that** said steps b) and c) are repeated, preferably for a preset number of cycles or until the amount of extracted material in said solution comprising solvent and extracted material reach a concentration whereby further dye extraction is impaired.

3. The process according to claim 1 or 2, wherein said extraction chamber containing said solvent and textile material is rotated around its horizontal axis, or wherein stirring means are rotated within said extraction chamber containing said solvent and textile material, whereby said textile material is stirred within said extraction chamber, during at least part of said extracting step, preferably during the entire extracting step.

4. The process according to any previous claim, wherein said step c) includes a step of separating said solution comprising solvent and extracted material from said textile by centrifuging, wherein said step c) is carried out in a centrifuge, preferably selected from vertical peeler type bottom discharge centrifuge, horizontal peeler type centrifuge, horizontal pusher type centrifuge, decanter type centrifuge.

5. The process according to claim 4, wherein, after said step c) clean solvent is fed to the textile present in said centrifuge and a hot solvent washing step of said textile is carried out in said centrifuge, wherein said centrifuge is rotated at a speed lower than a centrifugation speed.

6. The process according to claim 5, wherein after said hot solvent washing step said textile material is washed with water to remove solvent before a drying step.

7. The process according to any previous claim, wherein said textile material is reduced by mechanical treatment into pieces, at least 90% of said pieces having size from 1 mm to 50 mm, preferably from 2 mm to 10 mm, more preferably from 2 mm to 2.5 mm or at least 90% of said pieces having size in a range of 20 mm to 50 mm, before said step of providing said textile material to said extraction chamber.

8. A process according to any previous claim, wherein said extraction chamber is a first extraction chamber, and wherein said textile material, after said first extraction step b), is fed from said first extraction chamber to a first centrifuge for a first removal step c), from said first centrifuge to a second extraction chamber for a second extraction step b) and from said second extraction chamber to a second centrifuge for a second extraction step c), whereby said first and second extraction steps b) and removal steps c) are carried out in two different extraction chambers and two different centrifuges, respectively, preferably the solvent removed from a second extraction chamber and/or said second centrifuge is fed to said first extraction chamber.

9. A process according to any previous claim, wherein steps b) and c) are repeated more than twice in more than two extraction chambers and centrifuges, and wherein the solvent removed from any extraction chamber different from said first chamber is fed to the previous extraction chamber.

10. The process according to any previous claim, wherein said solvent used in said step b) is in the form of a solution comprising solvent and an extracted material, said extracted material including at least a dye.

11. The process according to any previous claims, wherein said solvent comprises DMF or DMAC or a mixture of DMF or DMAC with alkali water, or mixtures thereof; preferably the temperature of said solvent or said solution comprising solvent and extracted material in said extraction chamber is in the range of 80°C to 140°C, preferably 82°C to 135°C.

12. The process according to any previous claims, wherein the bath ratio textile/solvent (kg/liters) is in the range from 1/3 to 1/20, preferably from 1/10 to 1/20.

13. A process according to any previous claim, wherein said step c) is carried out in a centrifuge at a g-force in the range of from 250 to 5000 preferably from 800 and 2000, more preferably from 900 to 1300, for a time in the range of from 0.5 to 10 minutes, preferably from 1 to 5 minutes.

14. A process according to any previous claim from 1 to 13, wherein said textile comprises polyester fibers and further comprises at least a polyurethane material, preferably elastane; preferably said textile material comprises at least 90% by weight of polyester fibers and at most 10% by weight of elastane fibers, wherein at least part of said polyester fibers is dyed with at least one disperse dye, wherein said solvent is DMF, wherein the temperature of said solvent or said solution comprising solvent and extracted material in said extraction chamber and optionally in said step c1) is in the range of from 85°C to 105°C, preferably about 95°C wherein prior to said step of providing said textile to said extraction chamber said textile material is reduced by mechanical treatment into pieces, at least 90% of said pieces having size from 2.0 mm to 2.5 mm; or wherein said textile comprises polyester fibers and further comprises at least a cellulosic material, preferably cotton, more preferably cotton fibers, preferably said textile material comprises at least 50%, preferably 70%, by weight of polyester fibers and at most 50%, preferably 30%, by weight of cotton fibers, wherein at least part of said polyester fibers is dyed with at least one disperse dye and wherein at least part of said cotton fibers is dyed with at least a dye selected from vat dyes, reactive dyes, pigments, direct dyes and sulfur dyes, wherein said solvent is a mixture of DMF and water comprising at least one base and optionally at least one reducing agent, wherein the temperature of said solvent or said solution comprising solvent and extracted material in said extraction chamber and optionally in said step c1) is in the range of from 85°C to 110°C, preferably about 95°C, wherein prior to said step of providing said textile to said extraction chamber said textile material is reduced by mechanical treatment into pieces, at least 90% of said pieces having size from 2.0 mm to 50 mm, preferably at least 20 mm to 50 mm.

15. A process according to any previous claim from 1 to 13, wherein said textile comprises polyester fibers and further comprises at least a polyurethane material, preferably elastane and at least a cellulosic material, preferably cotton, more preferably cotton fibers, wherein said textile material preferably comprises at least 50%, preferably 70%, by weight of polyester fibers and at most 50%, preferably 30%, by weight of cotton fibers and elastane fibers, wherein at least part of said polyester fibers is dyed with at least one disperse dye and wherein at least part of said cotton fibers is dyed with at least a dye selected from vat dyes, reactive dyes, pigments, direct dyes and sulfur dyes, wherein said solvent is a mixture of DMF and water comprising a base and optionally at least one reducing agent, wherein the temperature of said solvent or said solution comprising solvent and extracted material in said extraction chamber and optionally in said step c1) is in the range of from 95°C to 105°C, preferably about 100°C, wherein prior to said step of providing said textile to said extraction chamber said textile material is reduced by mechanical treatment into pieces, at least 90% of said pieces having size from 2.0 mm to 50 mm, preferably at least 20 mm; or
wherein said textile material comprises at least 90% by weight of cotton fibers and at most 10% of elastane fibers, wherein at least part of said cotton fibers is dyed with at least a dye selected from vat dyes, reactive dyes, pigments, direct dyes and sulfur dyes, wherein said solvent is a mixture of DMF and water comprising a base and optionally at least one reducing agent, wherein the temperature of said solvent or said solution comprising solvent and extracted material in said extraction chamber and optionally in said step c1) is in the range of from 95°C to 105°C, preferably about 100°C, wherein prior to said step of providing said textile to said extraction chamber said textile material is reduced by mechanical treatment into pieces, at least 90% of said pieces having size above 20 mm, preferably 20 to 50 mm.

16. A process according to any previous claim from 1 to 13, wherein said textile material consists of cotton fibers, wherein at least part of said cotton fibers is dyed with at least a dye selected from vat dyes, reactive dyes, pigments, direct dyes and sulfur dyes, wherein said solvent is a mixture of DMF and water comprising at least a base and optionally at least one reducing agent, wherein the temperature of said solvent or said solution comprising solvent and extracted material in said extraction chamber and optionally in said step c1) is in the range of from 85°C to 110°C, preferably about 95°C.

17. A process according to any previous claim, wherein said solution obtained in step b) and/or c) is used as the solvent to extract dye from another batch of textile material, and in that said steps b) and c) are repeated using said solution as said solvent up to 20 times, preferably up to 40 times, more preferably up to 60 times.

18. An apparatus (A) for removing dyes from a textile, preferably a fabric, in a process according to any previous claim, comprising at least one extraction chamber (2) configured to treat said textile material with said solvent, at least a centrifuge (3) for separating said solution comprising solvent and extracted material from said textile material, at least one fresh solvent storage tank (6) and at least one distillation device (5;15), means (1) to reduce the size of said textile by mechanical treatment into fabric pieces, means to feed said textile pieces and said solvent to said extraction chamber, duct means (D) to feed a mixture of solvent and textile pieces from said extraction chamber (2) to said centrifuge (3) and means (14) to feed said solvent to said centrifuge (3) to carry out a washing step, wherein preferably at least said extraction chamber (2) and said duct means (D) for feeding said textile and solvent mixture to said centrifuge (3) are provided with insulation means to thermally insulate them, more preferably all the parts of the apparatus that are intended to contain said solvent or said mixture of textile and solvent are thermally insulated.

19. An apparatus (A) according to claim 18, wherein said fresh solvent storage tank (6) is configured to feed said fresh solvent to said extraction chamber (2), and configured to receive said solvent from said distillation device (5;15), and wherein said distillation device is configured to receive said solution comprising solvent and extracted material from said extraction chamber (2) and/or said centrifuge (3) to separate said extracted material from said solvent; said apparatus optionally comprising at least one storage tank (7a-7d), configured to receive said textile material from said extraction chamber (2) and to feed said textile material to said centrifuge (3); preferably said centrifuge is selected from vertical peeler type bottom discharge centrifuge, horizontal peeler type centrifuge, horizontal pusher type centrifuge, decanter type centrifuge.

20. The apparatus according to claim 18 or 19, wherein said centrifuge (3) has a lateral wall to which said textile pieces adhere after solvent removal by centrifugation and is provided with scraping means to remove the textile pieces from said lateral wall of the centrifuge after centrifugation.

21. An apparatus according to any claim 18 to 20, wherein said apparatus comprises a plurality of extraction chambers (2a-2d) and a plurality of centrifuges (3a-3d), wherein said extraction chambers and said centrifuges are arranged in a series, means for feeding said textile along said series of extraction chambers and centrifuges to provide a flow of textiles, wherein at least one centrifuge (3) is connected, directly or indirectly, with an extraction chamber (2) upwards with respect to the flow of textile and is connected to another extraction chamber downwards with respect to said flow of textiles, preferably each extraction chamber being connected to the previous extraction chamber, with solvent feeding means, said solvent feeding means being configured to feed said solution comprising solvent and extracted material exiting from each extraction chamber to said previous extraction chamber and wherein only the last extraction chamber of said series is connected to said fresh solvent storage tank, said fresh solvent storage tank being configured to feed said solvent to said last extraction chamber only.
